# EUROPÄISCHE PATENTANMELDUNG

(11) **EP 3 845 745 A1**
(43) Veröffentlichungstag der Anmeldung: **07.07.2021**
(21) Anmeldenummer: 20215339.1
(22) Anmeldetag: 18.12.2020
(51) Int. Cl.: F02B 39/10, F02B 37/18, F02B 37/24, F02D 41/00, F02D 41/04, F02D 41/10, F02D 41/12

(54) **VERFAHREN ZUM STEUERN EINES ELEKTRIFIZIERTEN TURBOLADERS EINER BRENNKRAFTMASCHINE SOWIE KRAFTFAHRZEUG MIT BRENNKRAFTMASCHINE**

(30) Priorität: 31.12.2019 CN 201911415015
(71) Anmelder: BMTS Technology (Shanghai) Co. Ltd., Shanghai 201401 (CN)
(72) Erfinder: AORI, Gele, Shanghai, 201401 (CN); CAO, Wenyue, Shanghai, 201401 (CN); DIAO, Yuehong, Shanghai, 201401 (CN); LIU, Jinlong, Shanghai, 201401 (CN); SHEN, Yidong, Shanghai, 201401 (CN); WANG, Yunfei, Shanghai, 201401 (CN); ZHANG, Renquan, Shanghai, 201401 (CN); ZHAO, Zongli, Shanghai, 201401 (CN)
(74) Vertreter: BRP Renaud & Partner mbB Rechtsanwälte Patentanwälte Steuerberater

(57) **Zusammenfassung**

Die Erfindung betrifft ein Verfahren (1) zum Steuern eines elektrifizierten Abgasturboladers (2) einer Brennkraftmaschine (3), umfassend eine Maßnahme a), gemäß welcher eine der Brennkraftmaschine (3) gestellte Lastanforderung (16) überwacht wird, sowie eine Maßnahme b), gemäß welcher ein Boost-Modus (18) des elektrifizierten Abgasturboladers (2) aktiviert wird, falls die in Maßnahme a) überwachte Lastanforderung (16) einen vorbestimmten Schwellwert (17) überschreitet.

## Beschreibung

Die Erfindung betrifft ein Verfahren zum Steuern eines elektrifizierten Abgasturboladers einer Brennkraftmaschine sowie ein Kraftfahrzeug, welches eine einen elektrifizierten Abgasturbolader umfassende Brennkraftmaschine umfasst, welche zur Durchführung eines solchen erfindungsgemäßen Verfahrens eingerichtet ist.

Zur Leistungssteigerung von Brennkraftmaschinen werden seit geraumer Zeit Abgasturbolader eingesetzt. Typischerweise umfassen solche Abgasturbolader eine Abgasturbine, welche in einem Abgasstrang der Brennkraftmaschine angeordnet ist, und einen Verdichter, welcher in einem Frischluftstrang der Brennkraftmaschine angeordnet ist. Dabei wird mittels der Abgasturbine des Abgasturboladers eine von der Brennkraftmaschine nicht genutzte Abgasenergie gewandelt und zum Antrieb des Verdichters genutzt. Der Verdichter sorgt dabei dafür, dass eine den Frischluftstrang der Brennkraftmaschine durchströmende Ladeluft derart verdichtet wird, dass der Ladedruck der Ladeluft erhöht wird. Dies bedeutet, dass der Brennkraftmaschine zur Verbrennung eines Kraftstoffs bei gegebenem Brennraumvolumen eine größere Luftmenge zur Verbrennung zur Verfügung steht. Dies bewirkt die gewünschte Leistungssteigerung. Bei herkömmlichen Abgasturboladern ist zur Übertragung der aus dem Abgas mittels der Abgasturbine generierten Leistung bzw. Energie zum Verdichter eine mechanische Antriebsverbindung zwischen der Abgasturbine und dem Verdichter vorgesehen.

Der Wirkungsgrad und die Leistungsfähigkeit solcher Abgasturbolader ist jedoch typischerweise stark abhängig vom Volumenstrom des die Abgasturbine antreibendem Abgases. Insbesondere bei einem kleinen Volumenstrom an Abgas, wie ein solcher besonders bei niedrigen Drehzahlen der Brennkraftmaschine vorherrscht, kann es daher dazu kommen, dass ein nur unzureichender Ladedruck mittels des Verdichters erzielt wird. Dies äußert sich in einer Leistungseinbuße, welche dem Fachmann auch unter dem Begriff "Turbo-Loch" bekannt ist.

Zur Vermeidung bzw. zur Minderung mit einem solchen Turbo-Loch einhergehender Leistungseinbußen werden in Abgasturboladern seit geraumer Zeit mechanische Ladedruck-Regeleinrichtungen eingesetzt. Mittels einer solchen Ladedruck-Regeleinrichtung, welche in Form einer variablen Turbinengeometrie oder eines Wastegate-Ventils umgesetzt sein kann, lässt sich die Kennlinie einer Abgasturbinenleistung optimieren, so dass der Wirkungsgrad des Abgasturboladers über ein breiteres Band an der Abgasturbine zugeführtem Abgasvolumen verbessert wird.

Zur Vermeidung des Turbo-Lochs werden seit einiger Zeit elektrifizierte Abgasturbolader eingesetzt, da besagte Ladedruck-Regeleinrichtungen insbesondere bei besonders tiefen Drehzahlen der Brennkraftmaschine an ihre Grenzen stoßen. Solche elektrifizierte Abgasturbolader umfassen - anstelle der oben beschriebenen mechanischen Antriebsverbindung zwischen Abgasturbine und Verdichter - typischerweise einen elektrischen Motor, mittels welchem dem Verdichter die zum Erzeugen des erforderlichen Ladedrucks nötige Leistung bzw. Energie zugeführt werden kann, und einen elektrischen Generator, mittels welchem die von der Abgasturbine aus dem Abgase generierte Leistung bzw. Energie in elektrische Leistung bzw. Energie gewandelt werden kann. Somit ist es auf flexible Weise möglich, die vom Generator erzeugte elektrische Leistung bzw. Energie zum Antreiben des elektrischen Motors zu verwenden. Herkömmliche elektrifizierte Abgasturbolader sind oftmals mit einem elektrischen Energiespeicher versehen, in welchem die vom Generator erzeugte, jedoch nicht zum Antreiben des elektrischen Motors benötigte Energie zwischengespeichert werden kann, so dass sie zu einem späteren Zeitpunkt zum Antreiben des elektrischen Motors zum Antreiben des Verdichters zur Verfügung steht.

Vor diesem Hintergrund offenbart die US 6,637,205 B1 einen elektrisch unterstützten Abgasturbolader, dessen Abgasturbine eine variable Turbinengeometrie aufweist. Außerdem weist der elektrisch unterstützte Abgasturbolader einen über eine Welle mechanisch mit der Abgasturbine gekoppelten Verdichter und einen mit der die Abgasturbine und den Verdichter verbindenden Welle gekoppelten elektrischen Motor zur Leistungsunterstützung auf. Dies bedeutet, dass mittels des elektrischen Motors dem Verdichter zusätzlich Leistung bzw. Energie zugeführt werden kann. Als nachteilig dabei erweist sich, dass die Abgasturbine und der Verdichter dauerhaft mechanisch miteinander verbunden sind, was nicht an jedem Betriebspunkt des Abgasturboladers bzw. der Brennkraftmaschine mit dem Abgasturbolader förderlich ist.

Aus der US 8,813,494 B2 ist es bekannt, in einem fluidisch parallel zur Abgasturbine des Turboladers verlaufenden Bypass-Kanal eine zusätzliche Turbine einzusetzen, mittels welcher ein elektrischer Generator betreibbar ist, falls die Abgasenergie größer ist als dies der mittels des Verdichters zu erzeugende Ladedruck erfordert. Eine elektrische Unterstützung des Verdichters ist dabei in nachteiliger Weise nicht möglich.

Außerdem offenbart die US 7,958,727 B2 eine Abgasturbine, welche mit einem elektrischen Generator antriebsverbunden ist. Dabei kann mittels des elektrischen Generators elektrische Leistung bzw. Energie erzeugt werden, welche dafür einsetzbar ist, den elektrisch angetriebenen Verdichter oder elektrische Traktionsmotoren eines Kraftfahrzeugs anzutreiben oder einen elektrischen Energiespeicher aufzuladen. Dabei wird in nachteiliger Weise keine Lösung angegeben, wie der elektrifizierte Abgasturbolader gesteuert werden kann, falls kurzfristig eine besonders große Last von der Brennkraftmaschine gefordert wird.

Darüber hinaus offenbart die US 6,647,724 B1 einen elektrifizierten Abgasturbolader, bei welchem ein elektrischer Generator mit der Abgasturbine antriebsverbunden ist. An der Abgasturbine ist außerdem eine variable Turbinengeometrie vorhanden. Ferner umfasst der elektrifizierte Abgasturbolader einen elektrischen Motor, mittels welchem der Verdichter des elektrifizierten Abgasturboladers antreibbar ist. Eine mittels des elektrischen Generators erzeugbare Leistung bzw. Energie kann entweder dem elektrischen Motor zum Antrieb des Verdichters oder einem elektrischen Energiespeicher zugeführt wird. Auch hierbei erweist es sich als nachteilig, dass keine Lösung angegeben wird, wie der elektrifizierte Abgasturbolader zu steuern ist, falls kurzfristig eine besonders große Lastanforderung an die Brennkraftmaschine gestellt wird.

Es ist daher eine Aufgabe der vorliegenden Erfindung, für Verfahren zum Steuern eines elektrifizierten Abgasturboladers einer Brennkraftmaschine sowie für Kraftfahrzeuge mit einer solchen einen elektrifizierten Abgasturbolader umfassenden Brennkraftmaschine - insbesondere zur Beseitigung der oben genannten Nachteile - neue Wege aufzuzeigen.

Diese Aufgabe wird durch das Verfahren gemäß dem unabhängigen Patentanspruch 1 sowie durch den Gegenstand des nebengeordneten Patentanspruchs 14 gelöst. Bevorzugte Ausführungsformen sind Gegenstand der abhängigen Patentansprüche.

Grundidee der Erfindung ist demnach, einen fluidischen Drosselwiderstand, entgegen welchem das Abgas im Betrieb einer Brennkraftmaschine mit einem elektrifizierten Turbolader strömt, mittels einer Ladedruck-Regeleinrichtung des elektrifizierten Abgasturboladers zu minimieren, falls an die Brennkraftmaschine eine besonders große, insbesondere maximale, Lastanforderung gestellt wird. Dann wird zugleich ein mit einem Verdichter des elektrifizierten Abgasturboladers antriebsverbundener Motor zum Erzeugen eines definierten Ladedrucks mit elektrischer Leistung bzw. Energie versorgt. Ein solcher definierter Ladedruck kann ein maximaler Ladedruck sein.

Dies ermöglicht vorteilhaft eine besonders schnelle Erfüllung einer großen der Brennkraftmaschine gestellten Lastanforderung, womit einhergeht, dass der elektrifizierte Abgasturbolader besonders schnell wieder an oder zumindest in der Nähe eines optimalen Betriebspunkts betrieben werden kann.

Ein erfindungsgemäßes Verfahren dient zum Steuern eines elektrifizierten Abgasturboladers einer Brennkraftmaschine, welche zweckmäßig von einem Kraftfahrzeug umfasst ist. Dabei weist die Brennkraftmaschine einen Abgasstrang und einen Frischluftstrang auf. Der elektrifizierte Abgasturbolader der Brennkraftmaschine umfasst eine in dem Abgasstrang der Brennkraftmaschine angeordnete und von einem Abgas der Brennkraftmaschine angetriebene Abgasturbine, welche mit einem elektrischen Generator antriebsverbunden ist. Außerdem weist der elektrifizierte Abgasturbolader einen Verdichter zum Verdichten einer der Brennkraftmaschine über den Frischluftstrang zugeführten Ladeluft auf, welcher von einem mit dem Generator antriebsverbundenen oder antriebsverbindbaren elektrischen Motor antreibbar ist. Der elektrifizierte Abgasturbolader umfasst ferner eine Ladedruck-Regeleinrichtung, welche zweckmäßig ein Wastegate-Ventil und/oder eine variable Turbinengeometrie ist. Mittels der Ladedruck-Regeleinrichtung des elektrifizierten Abgasturboladers ist ein fluidischer Drosselwiderstand, entgegen welchem das Abgas im Betrieb der Brennkraftmaschine strömt, variierbar. Das erfindungsgemäße Verfahren umfasst dabei eine Maßnahme a), gemäß welcher eine der Brennkraftmaschine gestellte Lastanforderung überwacht wird. Das Verfahren umfasst außerdem eine weitere Maßnahme b), gemäß welcher ein Boost-Modus des elektrifizierten Abgasturboladers aktiviert wird, falls die in Maßnahme a) überwachte Lastanforderung einen vorbestimmten (ersten) Schwellwert überschreitet. In dem Boost-Modus des elektrifizierten Abgasturboladers wird der fluidische Drosselwiderstand mittels der Ladedruck-Regeleinrichtung minimiert und der elektrische Motor derart mit elektrischer Leistung bzw. Energie versorgt, dass der Verdichter Ladeluft mit einem maximalen Ladedruck erzeugt. Es versteht sich, dass der Boost-Modus temporär aktiviert werden kann, sodass der Boost-Modus in einem stationären oder quasi-stationären Volllastbetrieb der Brennkraftmaschine nicht beibehalten wird. Dies bietet, wie voranstehend bereits aufgezeigt, den Vorteil, dass eine große der Brennkraftmaschine gestellte Lastanforderung besonders schnell erfüllt werden kann.

Gemäß einer vorteilhaften Weiterbildung des Verfahrens ist der elektrische Generator mit dem elektrischen Motor elektrisch über einen zwischengeschalteten oder zwischenschaltbaren elektrischen Energiespeicher antriebsverbunden oder antriebsverbindbar, so dass die vom Generator erzeugte und im Energiespeicher gespeicherte Energie zum späteren Antreiben des Motors zur Verfügung steht. Vorteilhaft können mittels eines solchen Energiespeichers Schwankungen der mittels des elektrischen Generators erzeugbaren elektrischen Leistung/Energie bzw. des Bedarfs an elektrischer Leistung/Energie des elektrischen Motors pufferartig ausgeglichen werden.

Bei einer weiteren vorteilhaften Weiterbildung des Verfahrens wird in dem Boost-Modus des elektrifizierten Abgasturboladers die elektrische Leistung bzw. Energie zum Antreiben des elektrischen Motors von diesem im Wesentlichen vollständig aus dem elektrischen Energiespeicher bezogen. Dies hat vorteilhaft zur Folge, dass in dem Boost-Modus mittels des elektrischen Generators keine elektrische Leistung bzw. Energie erzeugt werden muss, so dass der elektrische Generator bzw. die mit diesem antriebsverbundene Abgasturbine sich besonders widerstandsarm und entsprechend den Drosselwiderstand besonders wenig vergrößernd in einem Strom des Abgases mitdrehen kann.

Gemäß einer weiteren bevorzugten Weiterbildung des Verfahrens umfasst das Verfahren eine weitere Maßnahme c), gemäß welcher ein Brems-Modus des elektrifizierten Abgasturboladers aktiviert wird, falls die in Maßnahme a) überwachte Lastanforderung einen vorbestimmten zweiten Schwellwert unterschreitet, weleher kleiner ist als der erste Schwellwert. In dem Brems-Modus des elektrifizierten Abgasturboladers wird der fluidische Drosselwiderstand, entgegen welchem das Abgas im Betrieb der Brennkraftmaschine strömt, mittels der Ladedruck-Regeleinrichtung des elektrifizierten Abgasturboladers maximiert. Eine solche den zweiten Schwellwert unterschreitende Lastanforderung ist zweckmäßig eine Negativ-Lastanforderung bzw. eine Bremsanforderung. Vorteilhaft kann somit eine den zweiten Schwellwert unterschreitende Lastanforderung unter Unterstützung einer Motorbremse der Bremskraftmaschine besonders schnell erfüllt werden.

Bei einer weiteren bevorzugten Weiterbildung des Verfahrens umfasst das Verfahren eine Maßnahme d), gemäß welcher der elektrifizierte Abgasturbolader in einem Normal-Modus betrieben wird, falls die in Maßnahme a) überwachte Lastanforderung gleich oder größer dem zweiten Schwellwert und gleich oder kleiner dem ersten Schwellwert ist. In diesem Normal-Modus des elektrifizierten Abgasturboladers wird der fluidische Drosselwiderstand mittels der steuerbaren Ladedruck-Regeleinrichtung in Abhängigkeit der gemäß Maßnahme a) überwachten Lastanforderung beibehalten oder variiert. Dies ermöglicht es vorteilhaft, dass in dem Normal-Modus des elektrifizierten Abgasturboladers ein mittels des Verdichters des elektrifizierten Abgasturboladers erzeugbarer Ladedruck unter Leistungs- und Effizienzgesichtspunkten besonders gut erzeugbar ist.

Eine weitere vorteilhafte Weiterbildung des Verfahrens sieht vor, dass der aktivierte Boost-Modus solange beibehalten wird, bis die gemäß Maßnahme a) überwachte Lastanforderung einen dritten Schwellwert unterschreitet. Dieser dritte Schwellwert ist kleiner oder gleich dem ersten Schwellwert und größer oder gleich dem zweiten Schwellwert. Vorteilhaft ermöglicht dies, eine dem Abgasturbolader prinzipiell, insbesondere durch eine Massenträgheit rotatorisch beweglicher Komponenten des Abgasturboladers bedingte, anhaftende Hysterese auszugleichen. Zweckmäßig wird der in Maßnahme b) aktivierte Boost-Modus des elektrifizierten Abgasturboladers deaktiviert, falls die in Maßnahme a) überwachte Lastanforderung unter den dritten Schwellwert sinkt. Dies ermöglicht vorteilhaft einen besonders effizienten Betrieb des elektrifizierten Abgasturboladers.

Gemäß einer weiteren bevorzugten Weiterbildung des Verfahrens wird der elektrifizierte Abgasturbolader solange im Brems-Modus betrieben, bis die gemäß Maßnahme a) überwachte Lastanforderung einen vierten Schwellwert überschreitet. Der vierte Schwellwert ist größer oder gleich dem zweiten Schwellwert und kleiner oder gleich dem ersten Schwellwert. Vorteilhaft lässt sich damit die dem Abgasturbolader prinzipiell, insbesondere durch eine Massenträgheit rotatorisch beweglicher Komponenten des Abgasturboladers bedingte, anhaftende Hysterese besonders gut ausgleichen.

Zweckmäßig wird der in Maßnahme c) aktivierte Brems-Modus des elektrifizierten Abgasturboladers deaktiviert, falls die in Maßnahme a) überwachte Lastanforderung über den vierten Schwellwert steigt. Dies ermöglicht es, dass der elektrifizierte Abgasturbolader besonders effizient betrieben werden kann.

Gemäß einer weiteren bevorzugten Weiterbildung des Verfahrens wird in dem Boost-Modus des elektrifizierten Abgasturboladers mittels des elektrischen Generators im Wesentlichen keine elektrische Leistung bzw. Energie erzeugt. Dies hat vorteilhaft zur Folge, dass sich die mit dem elektrischen Generator antriebsverbundene Abgasturbine besonders widerstandsarm in dem Strom an Abgas mitdrehen kann, falls der Boost-Modus aktiv ist. Zweckmäßig wird dabei zur Vermeidung einer Erzeugung elektrischer Leistung bzw. Energie mittels des Generators eine elektrische Verbindung zu etwaigen an dem elektrischen Generator angeschlossenen elektrischen Verbrauchern sowie die elektrische Antriebsverbindung des Generators zum elektrischen Motor unterbrochen.

Eine weitere vorteilhafte Weiterbildung des Verfahrens sieht vor, dass in dem Brems-Modus des elektrifizierten Abgasturboladers eine elektrische Belastung des mit der Abgasturbine antriebsverbundenen elektrischen Generators maximiert wird. Dies hat vorteilhaft zur Folge, dass das Abgas an der Abgasturbine eine besonders große Arbeit verrichten muss, was unter Verstärkung einer Bremswirkung den auf die Brennkraftmaschine wirkenden Abgasgegendruck vorteilhaft vergrößert.

Zweckmäßig ist die in Maßnahme a) überwachte Lastanforderung eine Drehmomentanforderung oder eine Beschleunigungsanforderung. Eine solche Drehmomentanforderung bzw. Beschleunigungsanforderung lässt sich besonders einfach erfassen.

Gemäß einer vorteilhaften Weiterbildung des Verfahrens ist die steuerbare Ladedruck-Regeleinrichtung durch eine variable Turbinengeometrie mit verstellbaren Leitschaufeln gebildet, wobei die Leitschaufeln derart verstellbar sind, dass der fluidische Drosselwiderstand sich in Abhängigkeit ihrer Stellung ändert. Alternativ oder zusätzlich ist die steuerbare Ladedruck-Regeleinrichtung durch ein Wastegate-Ventil gebildet, mittels welchem ein Bypass-Kanal derart freigebbar ist, dass in einem zumindest teilweise geöffneten Zustand des Wastegate-Ventils unter Verkleinerung des fluidischen Drosselwiderstands zumindest ein Teil des Abgases über den Bypass-Kanal an der Abgasturbine vorbei leitbar ist. Eine solche Ladedruck-Regeleinrichtung ist besonders wirksam und zugleich gut umsetzbar.

Bei einer bevorzugten Weiterbildung des Verfahrens wird in Maßnahme b) der Boost-Modus in einem stationären Vollastbetrieb der Brennkraftmaschine nicht aktiviert und insbesondere spätestens nach einer vorbestimmten Zeitspanne deaktiviert. Vorteilhaft lässt sich somit vermeiden, dass der elektrische Energiespeicher vollständig erschöpft wird.

Die Erfindung betrifft außerdem ein Kraftfahrzeug, welches eine Brennkraftmaschine mit einem elektrifizierten Abgasturbolader umfasst. Die Brennkraftmaschine weist einen Abgasstrang und einen Frischluftstrang auf. Dabei weist der elektrifizierte Abgasturbolader eine in dem Abgasstrang angeordnete und von einem Abgas der Brennkraftmaschine angetriebene Abgasturbine auf, die mit einem elektrischen Generator antriebsverbunden ist. Außerdem weist der elektrifizierte Abgasturbolader einen Verdichter zum Verdichten einer der Brennkraftmaschine über den Frischluftstrang zugeführten Ladeluft auf, welcher von einem mit dem Generator antriebsverbundenen oder antriebsverbindbaren elektrischen Motor antreibbar ist. Ferner umfasst der elektrifizierte Abgasturbolader eine Ladedruck-Regeleinrichtung, welche zweckmäßig ein Wastegate-Ventil oder/und eine variabel Turbinengeometrie ist. Mittels dieser Ladedruck-Regeleinrichtung ist ein fluidischer Drosselwiderstand, entgegen welchem das Abgas im Betrieb der Brennkraftmaschine strömt, variierbar. Außerdem umfasst die Brennkraftmaschine eine Steuerungs-/ Regelungseinrichtung, welche zur Durchführung eines erfindungsgemäßen Verfahrens gemäß der voranstehenden Beschreibung eingerichtet ist. Die zuvor aufgezeigten Vorteile des erfindungsgemäßen Verfahrens übertragen sich in analoger Weise auch auf das erfindungsgemäße Kraftfahrzeug, welches zur Durchführung des erfindungsgemäßen Verfahrens eingerichtet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Beispiel eines erfindungsgemäßen Kraftfahrzeugs in einem Aufbauschema,
- Fig. 2: ein weiteres Beispiel eines erfindungsgemäßen Kraftfahrzeugs in einem Aufbauschema,
- Fig. 3: ein Beispiel eines erfindungsgemäßen Verfahrens in einem Flussdiagramm,
- Fig. 4: ein weiteres Beispiel eines erfindungsgemäßen Verfahrens in einem Flussdiagramm.

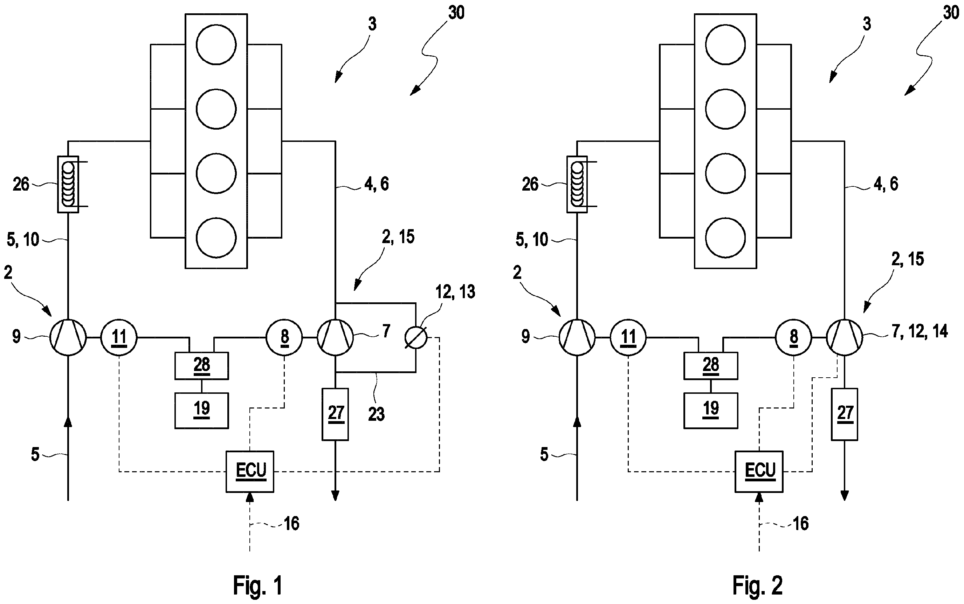

In der Figur 1 ist beispielhaft ein Aufbau eines erfindungsgemäßen Kraftfahrzeugs 30 illustriert. Das Kraftfahrzeug 30 weist eine Brennkraftmaschine 3 mit einem elektrifizierten Abgasturbolader 2 auf. Die Brennkraftmaschine 3 umfasst ferner einen Abgasstrang 4 und einen Frischluftstrang 5. Der Abgasstrang 4 ist von Abgas 6 der Brennkraftmaschine 3 durchströmbar. Der Frischluftpfad 5 ist zweckmäßig von einer der Brennkraftmaschine 3 zuführbaren Ladeluft 10 durchströmbar. Der elektrifizierte Abgasturbolader 2 weist eine Abgasturbine 7 auf, welche in dem Abgasstrang 4 der Brennkraftmaschine 3 angeordnet ist. Die Abgasturbine 7 wird im Betrieb der Brennkraftmaschine 3 vom Abgas 6 der Brennkraftmaschine 3 angetrieben. Der elektrifizierte Abgasturbolader 2 umfasst außerdem einen elektrischen Generator 8, welcher mit der Abgasturbine 7 antriebsverbunden ist.

Zweckmäßig ist der elektrische Generator 8 mechanisch mit der Abgasturbine 7 antriebsverbunden. Darüber hinaus umfasst der elektrifizierte Abgasturbolader 2 einen Verdichter 9 zum Verdichten der Ladeluft 10, welche der Brennkraftmaschine 3 über den Frischluftstrang 5 zugeführt wird. Außerdem weist der elektrifizierte Abgasturbolader 2 einen elektrischen Motor 11 auf, welcher mit dem Verdichter 9 antriebsverbunden ist. Zweckmäßig ist der elektrische Motor 11 mechanisch mit dem Verdichter 9 antriebsverbunden. Der Generator 8 ist nicht mechanisch, sondern elektrisch mit dem elektrischen Motor 11 antriebsverbunden oder antriebsverbindbar. Der elektrifizierte Abgasturbolader 2 umfasst darüber hinaus eine Ladedruck-Regeleinrichtung 12. Mittels dieser Ladedruck-Regeleinrichtung 12 ist ein fluidischer Drosselwiderstand 15, entgegen welchem das Abgas 6 im Betrieb der Brennkraftmaschine 3 strömt, variierbar. Es ist ferner erkennbar, dass die Brennkraftmaschine 3 eine Steuerungs-/ Regelungseinrichtung ECU umfasst. Die Steuerungs-/ Regelungseinrichtung ECU der Brennkraftmaschine 3 des Kraftfahrzeugs 30 ist zur Durchführung eines erfindungsgemäßen Verfahrens 1 zum Steuern des elektrifizierten Abgasturboladers 2 der Brennkraftmaschine 3 des Kraftfahrzeugs 30 eingerichtet/programmiert.

Gemäß dem Beispiel der Figur 1 ist die Ladedruck-Regeleinrichtung 12 des elektrifizierten Abgasturboladers 2 als Wastegate-Ventil 13 ausgebildet. Mittels des Wastegate-Ventils 13 ist ein Bypass-Kanal 23 fluidisch freigebbar, so dass in einem teilweise geöffneten Zustand des Wastegate-Ventils 13 zumindest ein Teil des Abgases 6 über den Bypass-Kanal 23 an der Abgasturbine 7 vorbei leitbar ist. Dies geht mit einer Verkleinerung des fluidischen Drosselwiderstands 15 einher, entgegen welchem das Abgas 6 im Betrieb der Brennkraftmaschine 3 strömt.

In der Figur 2 ist ein weiteres Beispiel eines erfindungsgemäßen Kraftfahrzeugs 30 mit einer einen elektrifizierten Abgasturbolader 2 umfassenden Brennkraftmaschine 3 veranschaulicht. Das Beispiel der Figur 2 unterscheidet sich dabei von jenem der Figur 1 darin, dass die Ladedruck-Regeleinrichtung 12 durch eine variable Turbinengeometrie 14 gebildet ist. Die variable Turbinengeometrie 14 weist verstellbare Leitschaufeln auf. Dabei sind die verstellbaren Leitschaufeln der variablen Turbinengeometrie 14 derart verstellbar, dass der fluidische Drosselwiderstand 15 sich in Abhängigkeit ihrer Stellung ändert. Zweckmäßig sind die Leitschaufeln der variablen Turbinengeometrie 14 dabei derart verstellbar, dass mittels ihrer Verstellung eine Änderung eines Strömungsquerschnitts des die variable Turbinengeometrie 14 durchströmenden Abgases 6 einhergeht, was eine Änderung des Drosselwiderstands 15 bedingt.

Den Figuren 1 und 2 ist ferner zu entnehmen, dass die durch den Frischluftstrang 5 führbare Ladeluft 10 mittels eines in dem Frischluftstrang 5 angeordneten Ladeluftkühlers 26 temperiert werden kann. Außerdem kann in dem Abgasstrang 4 ein Abgaskatalysator 27 zur Nachbehandlung des Abgases 6 vorhanden sein. Es ist außerdem zu erkennen, dass der elektrische Generator 8 mit dem elektrischen Motor 11 elektrisch über einen zwischengeschalteten oder einen zwischenschaltbaren elektrischen Energiespeicher 19 antriebsverbunden oder antriebsverbindbar ist, so dass die vom Generator 8 erzeugte und im Energiespeicher 19 gespeicherte Energie zum späteren Antreiben des Motors 11 zur Verfügung steht. Der elektrische Motor 11 und der elektrische Generator 8 können mittels einer Leistungselektronik 28 elektrisch mit dem elektrischen Energiespeicher 19 verbunden sein. Die Leistungselektronik 28 kann einen elektrischen Umrichter umfassen. Die Leistungselektronik 28 kann einen AC-DC/DC-AC-Wandler umfassen. Die Leistungselektronik 28 kann zur Verteilung einer elektrischen Belastung auf die an ihr angeschlossenen elektrischen Komponenten eingerichtet sein.

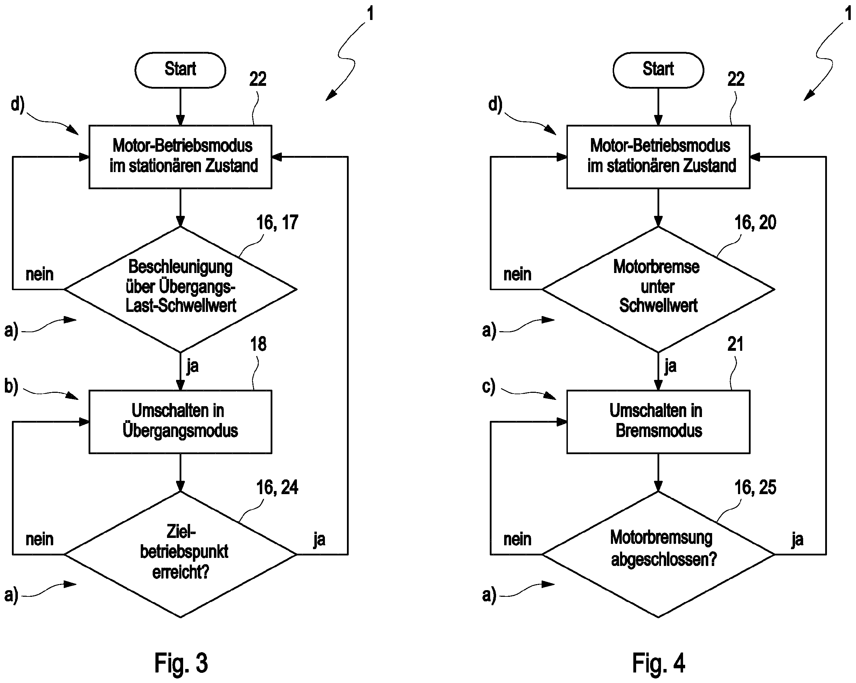

Figur 3 illustriert in einem Flussdiagramm beispielhaft den Ablauf eines erfindungsgemäßen Verfahrens 1 zum Steuern des elektrifizierten Abgasturboladers 2 gemäß den Figuren 1 und 2.

Das Verfahren 1 umfasst dabei eine Maßnahme a), gemäß welcher eine der Brennkraftmaschine 3 gestellte Lastanforderung 16 überwacht wird. Typischerweise wird eine solche Lastanforderung 16 der Brennkraftmaschine 3 vom Fahrer eines die Brennkraftmaschine 3 umfassenden Kraftfahrzeugs 30 vorgegeben. Die in der Maßnahme a) überwachte Lastanforderung 16 ist zweckmäßig eine Drehmomentanforderung oder eine Beschleunigungsanforderung.

Das Verfahren 1 umfasst außerdem eine Maßnahme b), welche vorgenommen wird, falls die in Maßnahme a) überwachte Lastanforderung 16 einen vorbestimmten ersten Schwellwert 17 überschreitet. Bei Erfüllung dieser Bedingung erfolgt gemäß der Maßnahme b) ein Aktivieren eines Boost-Modus 18 des elektrifizierten Abgasturboladers 2. In dem Boost-Modus 18 des elektrifizierten Abgasturboladers 2 wird der fluidische Drosselwiderstand 15, entgegen welchem das Abgas 6 im Betrieb der Brennkraftmaschine 3 strömt, mittels der Ladedruck-Regeleinrichtung 12 minimiert. In dem Fall, dass die die Ladedruck-Regeleinrichtung 12 ein Wastegate-Ventil 13 umfasst, wird dies erreicht, indem mittels des Wastegate-Ventils 13 ein fluidisch parallel zur Abgasturbine 7 geschalteter Bypass-Kanal 23 zugeschaltet wird, was mit einer den Drosselwiderstand 15 verringernden Vergrößerung eines Strömungsquerschnitts der Strömung an Abgas 6 einhergeht. In dem Fall, dass die Ladedruck-Regeleinrichtung 12 eine variable Turbinengeometrie 14 aufweist, wird das Minimieren des Drosselwiderstands 15 erreicht, indem Leitschaufein der variablen Turbinengeometrie 14 in eine maximal geöffnete Position verstellt werden, in welcher ein maximaler Strömungsquerschnitt der Strömung an Abgas 6 und damit einhergehend ein minimaler Drosselwiderstand 15 erreicht wird. Zugleich wird in dem Boost-Modus 18 der elektrische Motor 11 derart mit elektrischer Leistung bzw. Energie versorgt, dass der mit dem elektrischen Motor 11 antriebsverbundene Verdichter 9 Ladeluft 10 mit einem maximalen Ladedruck erzeugt. In dem Boost-Modus 18 wird die elektrische Leistung bzw. Energie zum Antreiben des elektrischen Motors 11 von diesem im Wesentlichen vollständig aus dem elektrischen Energiespeicher 14 bezogen.

Figur 4 zeigt ein weiteres Beispiel eines erfindungsgemäßen Verfahrens 1 in einem Flussdiagramm. Es ist erkennbar, dass das Verfahren zusätzlich eine Maßnahme c) umfasst. Diese Maßnahme c) sieht vor, dass falls die in Maßnahme a) überwachte Lastanforderung 16 einen vorbestimmten zweiten Schwellwert 20 unterschreitet, welcher kleiner ist als der erste Schwellwert 17, ein Brems-Modus 21 des elektrifizierten Abgasturboladers 2 aktiviert wird. Bei diesem Brems-Modus 21 des elektrifizierten Abgasturboladers 2 wird der fluidische Drosselwiderstand 15 mittels der Ladedruck-Regeleinrichtung 12 maximiert.

Die Figuren 3 und 4 zeigen außerdem, dass das Verfahren 1 eine weitere Maßnahme d) umfasst. Gemäß der Maßnahme d) wird der elektrifizierte Abgasturbolader 2 in einem Normal-Modus 22 betrieben, falls die in Maßnahme a) überwachte Lastanforderung 16 gleich oder größer dem zweiten Schwellwert 20 und gleich oder kleiner dem ersten Schwellwert 17 ist. In dem Normal-Modus 22 des elektrifizierten Abgasturboladers 2 wird der fluidische Drosselwiderstand 15 mittels der steuerbaren Ladedruck-Regeleinrichtung 12 in Abhängigkeit der gemäß Maßnahme a) überwachten Lastanforderung 16 beibehalten oder variiert.

Aus der Figur 3 ergibt sich außerdem, dass der aktivierte Boost-Modus 18 solange beibehalten wird, bis die gemäß Maßnahme a) überwachte Lastanforderung 16 einen dritten Schwellwert 24 unterschreitet. Dieser dritte Schwellwert 24 ist kleiner oder gleich dem ersten Schwellwert 17 und größer oder gleich dem zweiten Schwellwert 20. Dabei wird der in Maßnahme b) aktivierte Boost-Modus 18 des elektrifizierten Abgasturboladers 2 deaktiviert, falls die in Maßnahme a) überwachte Lastanforderung 16 unter den dritten Schwellwert 24 sinkt.

Figur 4 lässt erkennen, dass der elektrifizierte Abgasturbolader 2 solange im Brems-Modus 21 betrieben wird, bis die gemäß Maßnahme a) überwachte Lastanforderung 16 einen vierten Schwellwert 25 überschreitet. Der vierte Schwellwert 25 ist dabei größer oder gleich dem zweiten Schwellwert 20 und kleiner oder gleich dem ersten Schwellwert 17. Der in Maßnahme c) aktivierte Brems-Modus 21 des elektrifizierten Abgasturboladers 22 wird deaktiviert, für den Fall, dass die in Maßnahme a) überwachte Lastanforderung 16 über den vierten Schwellwert 25 steigt.

In dem Boost-Modus 18 wird mittels des elektrischen Generators 8 im Wesentlichen keine elektrische Leistung bzw. Energie erzeugt. Zweckmäßig wird dies dadurch erreicht, dass eine elektrische Verbindung zu mit dem Generator 8 elektrisch verbundenen elektrischen Verbrauchern und die elektrische Antriebsverbindung zum elektrischen Motor 11 unterbrochen werden. Dies bedeutet, dass der elektrische Generator 8 in dem Boost-Modus 18 zweckmäßig elektrisch nicht belastet wird. Demgegenüber wird in dem Brems-Modus 18 des elektrifizierten Abgasturboladers 2 eine elektrische Belastung des mit der Abgasturbine 7 antriebsverbundenen elektrischen Generators 8 maximiert. In Maßnahme b) wird der Boost-Modus 18 in einem stationären Vollastbetrieb der Brennkraftmaschine 30 nicht aktiviert. Hierzu kann der Boost-Modus 18 spätestens nach einer vorbestimmten Zeitspanne wieder deaktiviert werden.

## Patentansprüche

1. Verfahren (1) zum Steuern eines elektrifizierten Abgasturboladers (2) einer Brennkraftmaschine (3), insbesondere eines Kraftfahrzeugs (30),
- wobei die Brennkraftmaschine (3) einen Abgasstrang (4) und einen Frischluftstrang (5) umfasst,
- wobei der elektrifizierte Abgasturbolader (2) eine in dem Abgasstrang (4) angeordnete und von einem Abgas (6) der Brennkraftmaschine (3) angetriebene Abgasturbine (7) aufweist, die mit einem elektrischen Generator (8) antriebsverbunden ist,
- wobei der elektrifizierte Abgasturbolader (2) einen Verdichter (9) zum Verdichten einer der Brennkraftmaschine (3) über den Frischluftstrang (5) zugeführten Ladeluft (10) umfasst, welcher von einem mit dem Generator (8) antriebsverbundenen oder antriebsverbindbaren elektrischen Motor (11) antreibbar ist,
- wobei der elektrifizierte Abgasturbolader (2) eine Ladedruck-Regeleinrichtung (12), insbesondere ein Wastegate-Ventil (13) oder/und eine variable Turbinengeometrie (14), aufweist, mittels welcher ein fluidischer Drosselwiderstand (15), entgegen welchem das Abgas (6) im Betrieb der Brennkraftmaschine (3) strömt, variierbar ist,
- wobei das Verfahren (1) die folgenden Maßnahmen umfasst:
a) Überwachen einer an die Brennkraftmaschine (3) gestellten Lastanforderung (16);
b) Falls die in Maßnahme a) überwachte Lastanforderung (16) einen vorbestimmten (ersten) Schwellwert (17) überschreitet: Aktivieren eines Boost-Modus (18) des elektrifizierten Abgasturboladers (2), in welchem der fluidische Drosselwiderstand (15) mittels der Ladedruck-Regeleinrichtung (12) minimiert und der elektrische Motor (11) so mit elektrischer Leistung bzw. Energie versorgt wird, dass der Verdichter (9) Ladeluft (10) mit einem maximalen Ladedruck erzeugt.

2. Verfahren (1) nach Anspruch 1,
**dadurch gekennzeichnet, dass**
der elektrische Generator (8) mit dem elektrischen Motor (11) elektrisch über einen zwischengeschalteten oder zwischenschaltbaren und aufladbaren elektrischen Energiespeicher (19) antriebsverbunden oder antriebsverbindbar ist, so dass die vom Generator (8) erzeugte und im Energiespeicher (19) gespeicherte Energie zum späteren Antreiben des Motors (11) zur Verfügung steht.

3. Verfahren (1) nach Anspruch 2,
**dadurch gekennzeichnet, dass**
in dem Boost-Modus (18) die elektrische Leistung bzw. Energie zum Antreiben des elektrischen Motors (11) von diesem im Wesentlichen vollständig aus dem elektrischen Energiespeicher (14) bezogen wird.

4. Verfahren (1) nach Anspruch 1,
**dadurch gekennzeichnet, dass**
das Verfahren (1) folgende Maßnahme c) umfasst:
c) Falls die in Maßnahme a) überwachte Lastanforderung (16) einen vorbestimmten zweiten Schwellwert (20) unterschreitet, der kleiner ist als der erste Schwellwert (17): Aktvieren eines Brems-Modus (21) des elektrifizierten Abgasturboladers (2), in welchem der fluidische Drosselwiderstand (15) mittels der Ladedruck-Regeleinrichtung (12) maximiert wird.

5. Verfahren (1) nach Anspruch 4,
**dadurch gekennzeichnet, dass**
das Verfahren (1) folgende Maßnahme d) umfasst:
d) Falls die in Maßnahme a) überwachte Lastanforderung (16) gleich oder größer dem zweiten Schwellwert (20) und gleich oder kleiner dem ersten Schwellwert (17) ist: Betreiben des elektrifizierten Abgasturboladers (2) in einem Normal-Modus (22), in welchem der fluidische Drosselwiderstand (15) mittels der steuerbaren Laderdruck-Regeleinrichtung (12) in Abhängigkeit der gemäß Maßnahme a) überwachten Lastanforderung (16) beibehalten oder variiert wird.

6. Verfahren (1) nach einem der vorhergehenden Ansprüche,
**dadurch gekennzeichnet, dass**
der aktivierte Boost-Modus (18) so lange beibehalten wird, bis die gemäß Maßnahme a) überwachte Lastanforderung (16) einen dritten Schwellwert (24) unterschreitet, der kleiner oder gleich dem ersten Schwellwert (17) und größer oder gleich dem zweiten Schwellwert (20) ist.

7. Verfahren (1) nach Anspruch 6,
**dadurch gekennzeichnet, dass**
falls die in Maßnahme a) überwachte Lastanforderung (16) unter den dritten Schwellwert (24) sinkt, der in Maßnahme b) aktivierte Boost-Modus (18) des elektrifizierten Abgasturboladers (2) deaktiviert wird.

8. Verfahren (1) nach einem der vorhergehenden Ansprüche, bei Rückbezug auf Anspruch 4,
**dadurch gekennzeichnet, dass**
der elektrifizierte Abgas-Turbolader (2) so lange im Brems-Modus (21) betrieben wird, bis die gemäß Maßnahme a) überwachte Lastanforderung (16) einen vierten Schwellwert (25) überschreitet, der größer oder gleich dem zweiten Schwellwert (20) und kleiner oder gleich dem ersten Schwellwert (17) ist.

9. Verfahren (1) nach Anspruch 8,
**dadurch gekennzeichnet, dass**
falls die in Maßnahme a) überwachte Lastanforderung (16) über den vierten Schwellwert (25) steigt, der in Maßnahme c) aktivierte Brems-Modus (21) des elektrifizierten Abgasturboladers (2) deaktiviert wird.

10. Verfahren (1) nach einem der vorhergehenden Ansprüche,
**dadurch gekennzeichnet, dass**
in dem Boost-Modus (18) mittels des elektrischen Generators (8) im Wesentlichen keine elektrische Leistung bzw. Energie erzeugt wird.

11. Verfahren (1) nach einem der vorhergehenden Ansprüche, bei Rückbezug auf Anspruch 4,
**dadurch gekennzeichnet, dass**
in dem Brems-Modus (18) des elektrifizierten Abgasturboladers (2) eine elektrische Belastung des mit der Abgasturbine (7) antriebsverbundenen elektrische Generators (8) maximiert wird.

12. Verfahren (1) nach einem der vorhergehenden Ansprüche,
**dadurch gekennzeichnet, dass**
die in Maßnahme a) überwachte Lastanforderung (16) eine Drehmomentanforderung oder eine Beschleunigungsanforderung ist.

13. Verfahren (1) nach einem der vorhergehenden Ansprüche,
**dadurch gekennzeichnet, dass**
- die steuerbare Ladedruck-Regeleinrichtung (12) durch eine variable Turbinengeometrie (14) mit verstellbaren Leitschaufeln gebildet ist, wobei die Leitschaufeln derart verstellbar sind, dass der fluidische Drosselwiderstand (15) sich in Abhängigkeit ihrer Stellung ändert; und/oder dass
- die steuerbare Ladedruck-Regeleinrichtung (12) durch ein Wastegate-Ventil (13) gebildet ist, mittels welchem ein Bypass-Kanal (23) derart freigebbar ist, dass in einem zumindest teilweise geöffneten Zustand des Wastegate-Ventils (13) unter Verkleinerung des fluidischen Drosselwiderstands (15) zumindest ein Teil des Abgases (6) über den Bypass-Kanal (23) an der Abgasturbine (7) vorbeileitbar ist.

14. Verfahren nach einem der vorhergehenden Ansprüche,
**dadurch gekennzeichnet, dass**
in Maßnahme b) der Boost-Modus in einem stationären Vollastbetrieb der Brennkraftmaschine nicht aktiviert wird und insbesondere spätestens nach einer vorbestimmten Zeitspanne deaktiviert wird.

15. Kraftfahrzeug (30),
- mit einer einen elektrifizierten Abgasturbolader (2) umfassenden Brennkraftmaschine (3),
- wobei die Brennkraftmaschine (3) einen Abgasstrang (4) und einen Frischluftstrang (5) umfasst,
- wobei der elektrifizierte Abgasturbolader (2) eine in dem Abgasstrang (4) angeordnete und von einem Abgas (6) der Brennkraftmaschine (3) angetriebene Abgasturbine (7) aufweist, die mit einem elektrischen Generator (8) antriebsverbunden ist,
- wobei der elektrifizierte Abgasturbolader (2) einen Verdichter (9) zum Verdichten einer der Brennkraftmaschine (3) über den Frischluftstrang (5) zugeführten Ladeluft (10) umfasst, welcher von einem mit dem Generator (8) antriebsverbundenen oder antriebsverbindbaren elektrischen Motor (11) antreibbar ist,
- wobei der elektrifizierte Abgasturbolader (2) eine Ladedruck-Regeleinrichtung (12), insbesondere ein Wastegate-Ventil (13) oder/und eine variable Turbinengeometrie (14), aufweist, mittels welcher ein fluidischer Drosselwiderstand (15), entgegen welchem das Abgas (6) im Betrieb der Brennkraftmaschine (3) strömt, variierbar ist,
- wobei die Brennkraftmaschine (3) eine Steuerungs-/Regelungseinrichtung (EPU) umfasst, welche zur Durchführung des Verfahrens (1) nach einem der vorhergehenden Ansprüche eingerichtet ist.
